# EUROPEAN PATENT SPECIFICATION

(11) **EP 3 063 791 B1**
(45) Date of publication and mention of the grant of the patent: **30.05.2018**
(21) Application number: 14856905.6
(22) Date of filing: 30.10.2014
(51) Int. Cl.: H01L 27/14, H01L 29/94, H01L 21/205, G01N 27/12, G01N 27/16, G01N 27/22

(54) **METHOD OF FORMING A METAL OXIDE SEMICONDUCTOR SENSOR USING ATOMIC LAYER DEPOSITION AND CORRESPONDING METAL OXIDE SEMICONDUCTOR SENSOR**
VERFAHREN ZUR HERSTELLUNG EINES METALLOXIDHALBLEITERSENSORS MITTELS ATOMLAGENABSCHEIDUNG UND ENTSPRECHENDER METALLOXIDHALBLEITERSENSOR
PROCÉDÉ PERMETTANT DE FORMER UN CAPTEUR SEMI-CONDUCTEUR À BASE D'OXYDE MÉTALLIQUE À L'AIDE D'UN DÉPÔT DE COUCHES ATOMIQUES ET CAPTEUR SEMI-CONDUCTEUR À BASE D'OXYDE MÉTALLIQUE CORRESPONDANT

(30) Priority: 30.10.2013 US 201361897269 P
(43) Date of publication of application: 07.09.2016
(73) Proprietor: Robert Bosch GmbH, 70442 Stuttgart (DE)
(72) Inventor: SAMARAO, Ashwin, K., Mountain View, CA 94040 (US); O'BRIEN, Gary, Palo Alto, CA 94304 (US); FEYH, Ando, 72760 Ruetlingen (DE); PURKL, Fabian, 70839 Gerlingen (DE); YAMA, Gary, Mountain View, CA 94040 (US)
(86) International application number: PCT/US2014/063094
(87) International publication number: WO 2015/066289

(56) References cited:
- JP-A- 2005 017 182
- US-A1- 2006 240 588
- US-A1- 2009 312 954
- US-A1- 2011 269 298
- US-A1- 2012 272 721
- US-A1- 2013 032 902
- US-A1- 2013 032 902
- NISKANEN ANTTI J ET AL: "Atomic layer deposition of tin dioxide sensing film in microhotplate gas sensors", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, vol. 148, no. 1, 19 May 2010 (2010-05-19), pages 227-232, XP029821144, ISSN: 0925-4005, DOI: 10.1016/J.SNB.2010.05.018
- BALAJI PANCHAPAKESAN ET AL: "Nanoparticle engineering and control of tin oxide microstructures for chemical microsensor applications; Nanoparticle engineering and control of tin oxide microstructures for chemical microsensor applications", NANOTECHNOLOGY, IOP, BRISTOL, GB, vol. 12, no. 3, 28 August 2001 (2001-08-28), pages 336-349, XP020066802, ISSN: 0957-4484, DOI: 10.1088/0957-4484/12/3/323

## Description

### Field

This disclosure relates to a method of manufacturing a gas sensor device using atomic layer deposition techniques to form a gas-sensitive portion of the sensor device and the sensor device obtained by the method of fabrication.

### Background

A metal oxide semiconductor (MOS) gas sensor is used to detect the presence of a particular gas or gasses in an environment to which the sensor is exposed. The typical MOS gas sensor includes a heating element and a gas-sensitive portion located between two electrodes. The heating element is activated to heat the gas-sensitive portion to a temperature that is suitable for detecting a target gas. The gas-sensitive portion undergoes an electrical change in the presence of the target gas. The electrical change of the gas-sensitive portion is detected by an external circuit that is electrically connected to the gas sensor.

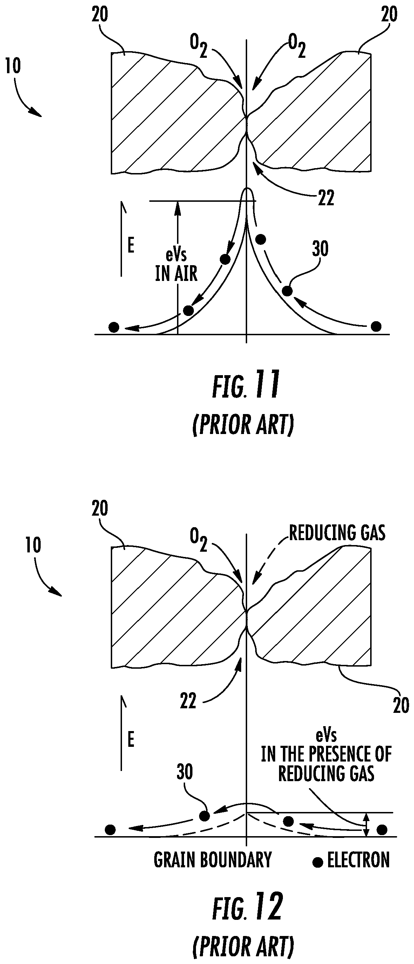

FIGs. 11 and 12 show part of a gas-sensitive portion 10 of a prior art MOS gas sensor. The gas-sensitive portion 10 is typically formed from a polycrystalline material that includes numerous grains 20. The region of contact between the grains 20 is referred to as a grain boundary 22. The grain boundaries 22 are target sites to which molecules of the target gas bind through a process referred to as adsorption. When adsorption of the target gas occurs, the gas-sensitive portion 10 undergoes the above-described electrical change that is detected by the external circuit.

Chemisorption is one type of adsorption that may occur at the grain boundaries 22 in the presence of the target gas. To illustrate the effects of chemisorption, FIG. 11 includes a graph showing an electrical potential barrier at the grain boundary 22 in the presence of air containing oxygen molecules. For an electron 30 to move through the grain boundary 22, it requires enough energy to overcome the potential barrier, which defines a reference magnitude measured in electronvolts (eV). A combination of the potential barriers of all/most of the grain boundaries 22 in the gas-sensitive portion 10 contributes to an electrical resistance of the gas-sensitive portion.

In FIG. 12, the exemplary grain boundary 22 is shown in the presence of molecules of a reducing gas. Chemisorption of the reducing gas has caused a reduction in the magnitude of the potential barrier due to donor electrons from the reducing gas. When the potential barriers are combined, the overall electrical resistance of the gas-sensitive portion 10 is reduced due to the reduction in the magnitude of at least some of the potential barriers at the grain boundaries 22 at which reduction has occurred. The exemplary reduction in electrical resistance of the gas-sensitive portion 10 is detectable by the external circuit connected to the gas sensor as being indicative of the presence of a target gas. Although not shown, in the presence of an oxidizing gas, the magnitude of the potential barrier increases, thereby resulting in an increase in the electrical resistance of the gas-sensitive portion 10, which is also detectable by the external circuit connected to the gas sensor as being indicative of the presence of a target gas.

Heterogeneous catalysis is another process that may occur at the grain boundaries 22, depending on the type gas near the gas-sensitive portion 10. One example of heterogeneous catalysis, referred to as carbon monoxide (CO) oxidation, results in the oxidation of a carbon dioxide (CO₂) molecule, due to the presence of a carbon monoxide molecule and an oxygen molecule located near one of the grain boundaries 22 of the gas-sensitive portion 10. Heterogeneous catalysis, in at least some instances, results in an electrical change of the gas-sensitive portion 10, which is detectable by the external circuit connected to the gas sensor as being indicative of the presence of a target gas. Niskanen, A.J. et al. report on the use of atomic layer deposition to produce a gas-sensitive tin dioxide film in a microhotplate gas sensor (NISKANEN ANTTI J ET AL, "Atomic layer deposition of tin dioxide sensing film in microhotplate gas sensors", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, 2010, vol. 148, no. 1, pages 227 - 232. JP 2005 017182 A relates to a thin film gas sensor comprising an outer circumference or both ends of a thin support film being supported by a Si substrate, a thin film heater formed on support substrate like a diaphragm having a thin central part and a thick outer circumference or both ends, a heater covered with an insulation layer, an electrode for a gas sensing film formed on the insulation layer, a gas sensing layer (SnO₂) comprising a thin film semiconductor, a selective combustion layer covering the gas sensing layer.

In the above examples the reactions resulting in an electrical change of the gas-sensitive portion 10 are described as occurring at or near the grain boundaries 22 of the material forming the gas-sensitive portion. It is desirable to increase the number of grain boundaries of a gas-sensitive portion of a MOS gas sensor in order to increase the degree of electrical change undergone by the gas-sensitive portion in the presence of a target gas. Therefore, further developments in the area of MOS gas sensors are desirable.

### Summary

The invention is directed to a method of fabricating a semiconductor sensor device includes forming from silicon dioxide a seed layer above a substrate, forming at least one electrode above the seed layer, forming a porous sensing layer on the seed layer and in electrical communication with the at least one electrode, and nucleating, at spaced apart sites on the seed layer, a sensing material, thereby forming a plurality of grain boundaries resulting in the porous sensing layer characterized in that the forming of the seed layer further comprises trenching the deposited seed layer, ion-milling the deposited seed layer at spaced-apart nucleation sites, or chemically activating spaced-apart nucleation sites on the deposited seed layer.

### Brief Description of the Figures

The above-described features and advantages, as well as others, should become more readily apparent to those of ordinary skill in the art by reference to the following detailed description and the accompanying figures in which:
FIG. 1 is a block diagram of an exemplary semiconductor sensor device, according to the disclosure, shown as a MOS gas sensor device;
FIG. 2 is a cross sectional view of the MOS gas sensor device of FIG. 1, showing a gas-sensing layer that has been formed using atomic layer deposition;
FIG. 3 is a depiction a portion of the MOS gas sensor device of FIG. 1, showing grains and grain boundaries of a portion of the gas-sensing layer;
FIG. 4 is a flowchart illustrating an exemplary method of forming the MOS gas sensor device of FIG. 1;
FIG. 5 is a cross sectional view of a portion of the MOS gas sensor device of FIG. 1, showing a substrate layer, an oxide layer, a heater layer, a "non-suitable" seed layer, and a sacrificial material;
FIG. 6 is a cross sectional view of a portion of the MOS gas sensor device of FIG. 1, showing trenches etched in the sacrificial material;
FIG. 7 is a cross sectional view of a portion of the MOS gas sensor device of FIG. 1, showing electrodes formed in the trenches of the sacrificial material;
FIG. 8 is a cross sectional view of a portion of the MOS gas sensor device of FIG. 1, after removal of the sacrificial material;
FIG. 9 is a transmission electron microscope view of a platinum layer formed using a process that is suitable for forming the gas-sensing layer of FIG. 2, such as atomic layer deposition;
FIG. 10 is another transmission electron microscope view of a platinum layer formed using the process that is suitable for forming the gas-sensing layer of FIG. 2;
FIG. 11 is a cross sectional view of a grain boundary of a gas-sensitive layer of a prior art MOS gas sensor in the presence of air, and a graph showing a corresponding potential barrier of the grain boundary; and
FIG. 12 is a cross sectional view of the grain boundary of FIG. 11 in the presence of air and a reducing gas, and a graph showing a corresponding potential barrier of the grain boundary.

### Detailed Description

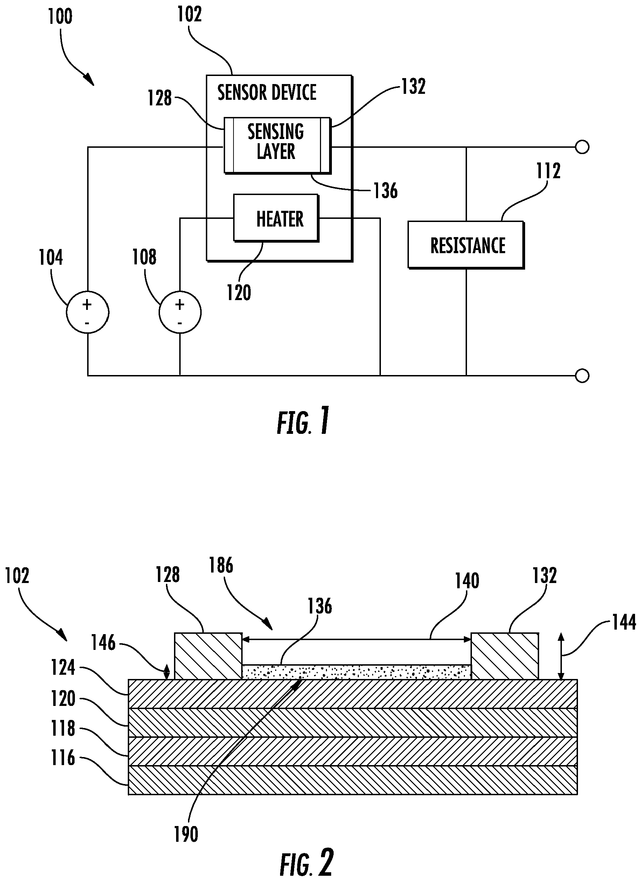

As shown in FIG. 1, an exemplary embodiment of a MOS sensor system 100, as described herein, includes a MOS gas sensor device 102 shown electrically connected to a sensor voltage source 104, a heater voltage source 108, and a resistance 112. The voltage sources 104, 108 are DC voltage sources, which are configured to maintain a desired magnitude of voltage. The resistance 112 provides a magnitude of known electrical resistance and is formed from any electrically resistive device, as desired by those of ordinary skill in the art.

With additional reference to FIG. 2, the gas sensor device 102, which is also referred to herein as a microelectromechanical system (MEMS) gas sensor device and a semiconductor sensor device, includes a handle layer 116, a buried oxide layer 118, a heater layer 120, a seed layer 124, two electrodes 128, 132, and a sensing layer 136. The handle layer 116 is typically formed from a layer of silicon as is provided in a typical silicon on insulator (SOI) wafer. The handle layer 116 is also referred to herein as a substrate.

The oxide layer 118 is located between the handle layer 116 and the heater layer 120 and is configured to isolate the handle layer from the heater layer. The oxide layer 118 is formed from silicon dioxide (SiO₂), sapphire, or another suitable insulative material.

The heater layer 120 is formed on the oxide layer 118 and is electrically connected to the voltage source 108. The heater layer 120 is a material that generates heat when exposed to an electrical current or other form of energy. The heater layer 120 is configured to heat the sensing layer 136 to a desired temperature. The heater layer 120 is also referred to herein as a heater, a heating layer, a resistive heater, a heater structure, and a heating structure. In the illustrated embodiment, the handle layer 116, the oxide layer 118, and the heater layer 120 are formed from a typical SOI wafer with the heater layer 120 being the "device layer" of the SOI wafer. Accordingly, the heater layer 120, in at least one embodiment, is formed from silicon. Other suitable materials for forming the heater layer 120 include doped silicon, composite materials, and the like. Furthermore, in some embodiments a separate heater material is used to form the heater layer 120. Exemplary materials suitable for forming the separate heater include silicon dioxide and platinum or other metals.

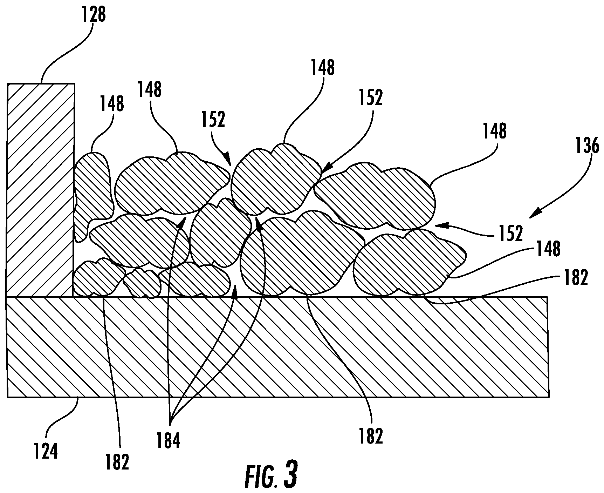

As shown in FIG. 2, the seed layer 124 is formed on the heater 120 and is located above the substrate 116. The seed layer 124, in one embodiment, is a generally planar layer formed from a material that is selected to interact with the sensing layer in an "unsuitable" or "non-suitable" manner that encourages nucleation of the sensing layer 136 at spaced-apart, isolated, and/or sporadic nucleation sites 182 (FIG. 3) (collectively referred to herein as "spaced-apart") on the seed layer. The non-suitable seed layer 124 is fromed from thermal silicon dioxide.

According to the independent claims, the non-suitable seed layer 124 is structured with trenching to further encourage spaced-apart nucleation of the sensing layer 136. Alternatively, the "structuring" includes patterning the seed layer 124 by chemically activating certain spaced-apart nucleation sites 182 in order to encourage spaced-apart nucleation of the sensing layer 136. Alternatively, the "structuring" includes ion-milling the seed layer 124 with passive gasses, such as argon, to make the seed layer more dense or less dense at spaced-apart nucleation sites 182, thereby resulting in selective encouragement of spaced-apart nucleation of the sensing layer 136. In general, the seed layer 124 is formed and/or structured from any material(s) and by any process(s) that encourages spaced-apart nucleation of the sensing layer 136 on the seed layer.

The electrodes 128, 132 are formed above the non-suitable seed layer 124 from an electrically conductive material using any process as desired by those of ordinary skill in the art. In one embodiment, the electrodes 128, 132 are formed from platinum and are electrically isolated from each other. The electrodes 128, 132 are spaced-apart from each other by a distance 140, and define a height 144. The distance 140 and the height 144 are selected based on the gas to be sensed/detected (referred to herein as a target gas), the material of the sensing layer 136, the structure of the sensing layer, and the application of the sensor device 102, among other considerations. Although the sensor device 102 is shown as including two of the electrodes 128, 132, in other embodiments, the sensor device includes any number of electrodes, as desired by those of ordinary skill in the art.

With continued reference to FIG. 2, the sensing layer 136 is supported directly on the non-suitable seed layer 124 between the electrodes 128, 132. The sensing layer 136 is in electrical communication with the electrodes 128, 132 so that electrical current is able to flow between the electrodes through the sensing layer. The sensing layer 136 defines a width 140 and a thickness 146. The thickness 146 of the sensing layer 136 is less than the thickness 144 of the electrodes 128, 132. In one embodiment, the thickness 146 of the sensing layer 136 is between approximately ten nanometers to approximately one hundred nanometers. Depending on the desired application of the sensor device 102, the thickness 146 may be outside of the exemplary range. Exemplary materials for forming the sensing layer 136 include tin dioxide (SnO₂), tungsten trioxide (WO₃), and zinc oxide (ZnO). The sensing layer 136 and the electrodes 128, 132 are serially connected to the resistance 112 and to the voltage source 104.

As shown in FIG. 3, the sensing layer 136 is a porous structure that is formed from a plurality of grains 148, which are also referred to herein as crystallites. In general, each grain 148 contacts at least one other grain at a junction referred to as a grain boundary 152 (some of which are identified in FIG. 3). In an exemplary embodiment, the grains 148 have an average width of approximately twenty nanometers, but may have any width as desired by those of ordinary skill in the art. The grains 148 are shaped/configured, in one embodiment, to form as many grain boundaries 152 as possible, so that the sensing layer 136 provides more grain boundaries 152 per unit length, as compared to prior art sensing layers. Accordingly, the grains 148 of the sensing layer 136 enable the sensing layer to, in general, be thinner and smaller than prior art sensing layers / sensing portions, but have at least as many or more grain boundaries 152.

In operation, the sensor device 102 is configured to sense the presence of a target gas or target gasses in a space. Exemplary target gasses include carbon monoxide, nitrogen dioxide (NO₂), ammonia (NH₃), methane (CH₄), volatile organic compounds (VOCs), and the like. Due to the small size of the sensor device 102, as compared to prior art MOS gas sensors, it is usable to detect gasses in a variety of applications such as automobile exhaust systems, home appliances, laptops, handheld or portable computers, mobile telephones, smart phones, wireless devices, tablets, personal data assistants (PDAs), portable music players, film cameras, digital cameras, GPS receivers and other satellite navigation systems, electronic reading displays, projectors, cockpit controls, game consoles, earpieces, headsets, hearing aids, wearable display devices, security systems, and other applications as desired by those ordinary skill in the art. In one embodiment, the sensor device 102 measures approximately two millimeters by three millimeters by one millimeter, but may be either smaller or larger depending on the desired application.

Use of the sensor device 102 includes applying a voltage to the heater 120 with the voltage source 108. In response to the voltage, the heater 120 is heated to a temperature that is based at least on the magnitude of the voltage source 108 and the electrical resistance of the heater 120. Heat energy from the heater 120 is transferred to the sensing layer 136.

The sensing layer 136 is heated by the heater 120 to a sensing temperature within a heating time period. The sensing temperature is based on at least properties of the target gas and the environment/space in which the sensor device 102 is positioned. Exemplary sensing temperatures range from one hundred fifty degrees Celsius to five hundred degrees Celsius; however, the sensor device 102 is configurable to operate at any sensing temperature desired by those of ordinary skill in the art. Since the sensing layer 136 is only about ten nanometers to one hundred nanometers thick (i.e. thickness 146, FIG. 2) it is heated to the sensing temperature by the heater 120 substantially instantly. Specifically, in one embodiment, the heating time period (also referred to herein as a thermal time constant) begins when the voltage from the voltage source 108 is applied to the heater 120 and ends when the sensing temperature is reached, and a duration of the heating time period is less than approximately ten microseconds.

After the sensor device 102 has been heated to the sensing temperature, voltage from the voltage source 104 is applied to the electrode 128, the sensing layer 136, the electrode 132, and the resistance 112. The voltage from the voltage source 104 establishes an electrical current (referred to as a sensor current) through the electrodes 128, 132, the sensing layer 136, and the resistance 112. The magnitude of the sensor current is based on at least the combined resistance of the electrodes 128, 132, the sensing layer 136, and the resistance 112, and is the same through the electrodes 128, 132, the sensing layer 136, and the resistance 112.

Next, the sensor device 102 is exposed to a space in which the target gas may or may not be present. The sensor device 102 and the resistance 112 form a voltage divider circuit, and an external circuit (not shown) monitors a voltage drop across the resistance 112 to determine if the target gas is present in the space. In particular, if the target gas is present and is an oxidizing gas, then as the target gas binds to the grain boundaries 152 via adsorption, the electrical resistance of the sensing layer 136 is increased and the sensor current is decreased. The decrease in sensor current is monitored by the external circuit as a decrease in voltage dropped across the resistance 112. If the target gas is present and is a reducing gas, then as the target gas binds to the grain boundaries 152, the electrical resistance of the sensing layer 136 is decreased and the sensor current is increased. The increase in sensor current is monitored by the external circuit as an increase in voltage dropped across the resistance 112.

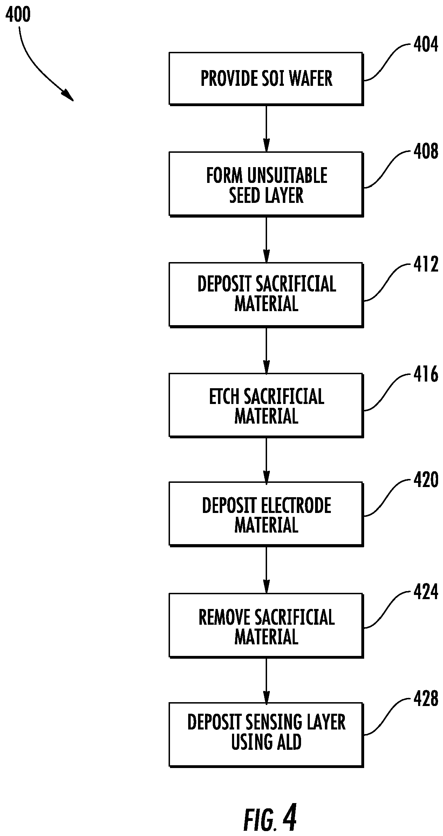

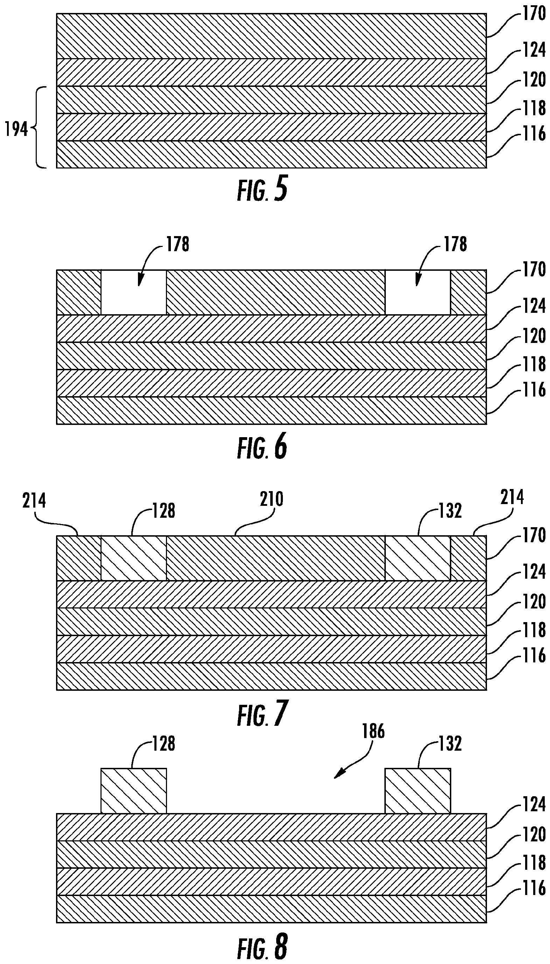

With reference to FIG. 4, a flowchart illustrates an exemplary method 400 of forming the sensor device 102. As shown in FIG. 5 and with reference to block 404, an SOI wafer 194 is provided that includes the handle layer 116, the oxide layer 118, and a device layer that is configured as the heater 120.

In block 408 the seed layer 124 is applied to the heater 120. The material of the seed layer 124 is selected to be a "non-suitable" material. The term "non-suitable material" is defined herein as a material that when used as a seed layer for a particular sensor layer material, causes spaced-apart nucleation of the grains 148 during depositing / formation of the sensing layer 136. The seed layer 124 is applied to the heater 120 using any process as desired by those of ordinary skill in the art.

Then, in block 412, a sacrificial material 170 is applied to the seed layer 124. The sacrificial material 170 is deposited/formed on the seed layer 124 using any process, as desired by those of ordinary skill in the art.

With reference to FIG. 6 and block 416, a mask (not shown) is applied to the sacrificial material 170 in a pattern that is configured to define openings (not shown) that correspond to the electrodes 128, 132. Thereafter, the sacrificial material is shaped / trenched through a wet or dry etching process or any other process as desired by those of ordinary skill in the art. After the shaping, the mask is removed and the sacrificial material 170 defines a well 178 for each electrode 128, 132.

Next, as shown FIG. 7 and in block 420, the material of the electrodes 128, 132 is applied to the wells 178, using any process as desired by those of ordinary skill in the art. The material of the electrodes 128, 132 at least partially fills the wells 178 and takes the shape of the wells. In some processes, chemical-mechanical polishing (CMP) may be conducted resulting in a desired height of the electrodes 128, 132.

Next, with reference to FIG. 8 and block 424, the sacrificial material 170 is removed from the seed layer 124 leaving the electrodes 128, 132 formed on the seed layer. Additionally, the removal of the sacrificial layer 170 forms a well 186 between the electrodes 128, 132 for receiving the material of the sensing layer 136.

With reference again to FIG. 2 and to block 428, next the sensing layer 136 is formed on the seed layer 124 in the well 186 defined between the electrodes 128, 132. According to claim 1, atomic layer deposition (ALD) is used to form the sensing layer 136 even though the seed layer is formed from a non-suitable material.

ALD is used to deposit materials by exposing a substrate to several different precursors sequentially. A typical deposition cycle begins by exposing a substrate to a precursor "A" which reacts with the substrate surface until saturation. This is referred to as a "self-terminating reaction." Next, the substrate is exposed to a precursor "B" which reacts with the surface until saturation. The second self-terminating reaction reactivates the surface. Reactivation allows the precursor "A" to react with the surface. Typically, the precursors used in ALD include an organometallic precursor and an oxidizing agent such as water vapor or ozone.

The deposition cycle results, ideally, in one atomic layer being formed on the substrate. Thereafter, another layer may be formed by repeating the process. Accordingly, the final thickness of the layer is controlled by the number of cycles the substrate is exposed to. Moreover, deposition using an ALD process is substantially unaffected by the orientation of the particular surface upon which material is to be deposited. Accordingly, an extremely uniform thickness of material may be realized both on the upper and lower horizontal surfaces and on the vertical surfaces.

Typically, ALD is used to deposit a generally contiguous (non-porous) thin film of a material onto a seed layer formed from a "suitable material." The seed layer material is referred to as being "suitable" for the deposited material when, after a predetermined number of ALD cycles, the deposited material forms a polycrystalline thin film that is contiguous (i.e. non-porous) across at least a portion of the seed layer material. That is, the grains of deposited material formed by ALD on a "suitable" seed layer are positioned tightly against each other so that there are substantially no air spaces therebetween. The materials therefore form a suitable pair of materials, since the resulting layer of deposited material is generally contiguous. Accordingly, a gas-sensing layer formed from a material deposited on a "suitable" seed layer using ALD includes very few grain boundaries that are available to interact with a gas, because most of the grain boundaries are unexposed to the air space around the deposited material. It turns out, however, that the structure of the material deposited using ALD, is heavily dependent on the interaction of the deposited material with the material forming the seed layer.

When forming the sensing layer 136, ALD is used to deposit the material of the sensing layer 136 onto the "non-suitable" seed layer material. The seed layer 124 is referred to as being "non-suitable" since the deposited material forms a conforming polycrystalline layer (thin film) that is porous. The material of the sensing layer 136 and the non-suitable material of the seed layer 124 are referred to herein as a non-suitable pair of materials. Typically, the porous layer of deposited material is undesirable; however, when used as the sensing layer 136, the porous film of deposited material functions extraordinarily well. In particular, the non-suitable material of the seed layer 124 causes nucleation of the grains 148 of the deposited sensing material at the spaced-apart nucleation sites 182 (FIG. 3). Accordingly, the grains 148 grow in far-isolated "islands" with numerous air spaces 184 (FIG. 3) therebetween. Additionally, the grains 148 contact each other at many grain boundaries 152, which promotes adsorption (including chemisorption and heterogeneous catalysis) of the target gas. Even after several cycles of ALD the deposited material of the sensing layer 136 remains porous, and the grains 148 contact each other at many grain boundaries 152. The selection of the material of the sensing layer 136, the seed layer 124, and the number of cycles of ALD performed is based on at least the desired size of the grains 148, the density of the grains, the thickness of the sensing layer 136, and the desired number of grain boundaries 152.

The large number of grain boundaries 152 and the near instant heating of the sensing layer 136 encourages more rapid and more complete adsorption of the target gas on the sensing layer, as well as a more pronounced electrical change of the sensing layer in response to being exposed to the target gas. In short, using ALD to deposit a material onto a non-suitable seed layer 124 results in a sensing layer 136 that has enhanced gas sensing performance with a very fast response rate.

With reference again to FIG. 7, in another exemplary process, a portion 210 of the sacrificial layer 170 is removed and the portions 214 of the sacrificial material 170 remain after a first removal of the sacrificial material. Next, the material of the sensor layer 136 is applied to the well 186 (FIG. 8) using the ALD process described above. Thereafter, the portions 214 of the sacrificial material 170 are etched away. This process prevents deposition of the material of the sensor layer 136 outside of the well 186.

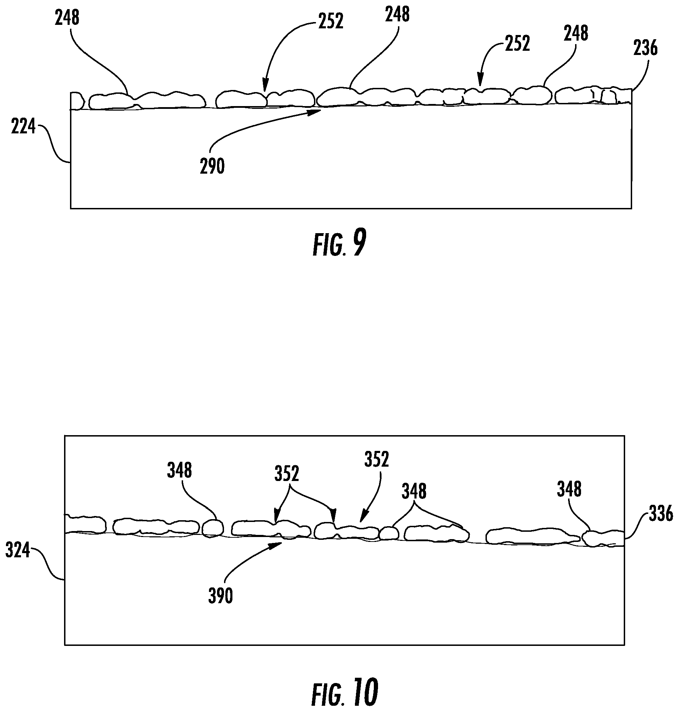

FIGs. 9 and 10 show two microscope views of a sensing layer 236, 336 deposited onto a non-suitable seed layer 224, 324. The seed layer 224, 324 is formed from silicon dioxide and the deposited material of the sensing layer 236, 336 is platinum (Pt). In FIG. 9, approximately one hundred fifty cycles of ALD were performed at approximately two hundred seventy degrees Celsius. In FIG. 10, approximately one hundred twenty five cycles of ALD were performed at approximately two hundred seventy degrees Celsius. The reduction in cycles results in smaller grains 348 and more space between each grain.

Using ALD, as described above, results in a sensing layer 136, 236, 336 that includes large amounts of three-interface regions between gas, metal / metal oxide, and the seed layer. Additionally, the ALD process results in a gas-sensing region 190, 290, 390 being formed at the interface of the sensing layer 136, 236, 336 and the seed layer 124, 224, 324.

In another embodiment, nucleation of a plurality of grains of a sensing material is encouraged / developed between a suitable pair of materials. For example, the seed layer 124 is formed from a first material and the sensing layer 136 is formed from a second material that is "suitable" for depositing on the seed layer using ALD. To prevent the formation of a contiguous layer of the deposited sensing material, the material of the seed layer 124 is processed into a non-suitable seed layer to encourage spaced apart nucleation of the deposited sensing material into a plurality of grains that form the porous sensing layer 136.

One way that the material of the seed layer 124 is processed is by selectively removing material of the seed layer to form the non-suitable seed layer. For example, in one embodiment, the suitable material is trenched to form the non-suitable seed layer 124. The seed layer 124 may be trenched with any suitable number and arrangement of trenches that results in spaced apart nucleation of the deposited sensing material of the sensing layer 136.

Another way that the material of the seed layer 124 is processed is by defining spaced apart nucleation sites 182 in the material of the seed layer. Desired nucleation sites 182 are defined, in one embodiment, by ion-milling the material of the seed layer 124 with passive gasses at the desired nucleation sites. Desired nucleation sites 182 are defined, in another embodiment, by chemically activating the material of the seed layer 124 at the desired nucleation sites.

In an example, not falling under the scope of the claims, upon adsorption of the target gas by the sensing layer 136, 236, 336, the presence of the target gas is detected by the external circuit in response to the sensing layer undergoing a change in resonant frequency and/or a change in capacitance between the electrodes 128, 132.

## Claims

1. A method of fabricating a semiconductor sensor device (102) comprising:
Forming from silicon dioxide a seed layer (124) above a substrate (116);
forming at least one electrode (128) above the seed layer (124); and forming a porous sensing layer (136) on the seed layer (124) and in electrical communication with the at least one electrode (128) using atomic layer deposition, ALD by nucleating, at spaced apart sites (182) on the seed layer (124), a sensing material, thereby forming a plurality of grain boundaries (152) resulting in the porous sensing layer (136),
**characterized in that** the forming of the seed layer (124) further comprises a step of structuring the seed layer (124) by
a) trenching the deposited seed layer (124),
b) ion-milling the deposited seed layer (124) at spaced-apart nucleation sites (182), or
c) chemically activating spaced-apart nucleation sites (182) on the deposited seed layer (124).

2. The method of claim 1, wherein the porous sensing layer (136) includes a plurality of grains (148) and forming the porous sensing layer (136) comprises:
determining a desired grain size of the plurality of grains (148);
determining a desired number of ALD cycles based upon the determined desired grain size; and
performing the determined desired number of ALD cycles.

3. The method of claim 1, wherein the porous sensing layer (136) includes a plurality of grains (148) and forming the porous sensing layer (136) comprises:
determining a desired grain density of the plurality of grains (148);
determining a desired number of ALD cycles based upon the determined desired grain density; and
performing the determined desired number of ALD cycles.

4. The method of claim 1, wherein the porous sensing layer (136) includes a plurality of grains (148) and forming the porous sensing layer (136) comprises:
determining a desired thickness of the porous sensing layer (136);
determining a desired number of ALD cycles based upon the determined desired thickness; and
performing the determined desired number of ALD cycles.

5. The method of claim 1, wherein the porous sensing layer (136) includes a plurality of grains (148) and forming the porous sensing layer (136) comprises:
determining a desired number of grain boundaries (152) between grains (148) of the plurality of grains (148);
determining a desired number of ALD cycles based upon the determined desired number of grain boundaries (152); and
performing the determined desired number of ALD cycles.

6. The method of claim 1 further comprising:
forming a heater layer (120) above the substrate; and
forming the seed layer (124) above the heater layer (120).

7. A semiconductor sensor device (102) obtained by the method of any of claims 1-6.

## Patentansprüche

1. Verfahren zur Herstellung einer Halbleitersensorvorrichtung (102), umfassend:
Bilden einer Keimschicht (124) aus Siliciumdioxid auf einem Substrat (116);
Bilden wenigstens einer Elektrode (128) auf der Keimschicht (124);
und
Bilden einer porösen Sensorschicht (136) auf der Keimschicht (124) und in elektrischer Verbindung mit der wenigstens einen Elektrode (128) unter Verwendung von Atomschichtabscheidung ALD durch Nukleieren eines Sensormaterials an voneinander beabstandeten Stellen (182) auf der Keimschicht (124), um eine Vielzahl von Korngrenzen (152) zu bilden, um die poröse Sensorschicht (136) zu erhalten,
**dadurch gekennzeichnet, dass** das Bilden der Keimschicht (124) ferner einen Schritt des Strukturierens der Keimschicht (124) durch
a) Bilden von Furchen in der abgeschiedenen Keimschicht (124),
b) Ionenmahlen der abgeschiedenen Keimschicht (124) an voneinander beabstandeten Nukleierungsstellen (182) oder
c) chemisches Aktivieren von voneinander beabstandeten Nukleierungsstellen (182) auf der abgeschiedenen Keimschicht (124)
umfasst.

2. Verfahren gemäß Anspruch 1, wobei die poröse Sensorschicht (136) eine Vielzahl von Körnern (148) umfasst und das Bilden der porösen Sensorschicht (136) umfasst:
Bestimmen einer gewünschten Korngröße der Vielzahl von Körnern (148);
Bestimmen einer gewünschten Anzahl von ALD-Zyklen auf der Grundlage der bestimmten gewünschten Korngröße; und
Durchführen der bestimmten gewünschten Anzahl von ALD-Zyklen.

3. Verfahren gemäß Anspruch 1, wobei die poröse Sensorschicht (136) eine Vielzahl von Körnern (148) umfasst und das Bilden der porösen Sensorschicht (136) umfasst:
Bestimmen einer gewünschten Korndichte der Vielzahl von Körnern (148);
Bestimmen einer gewünschten Anzahl von Alu-zyklen auf der Grundlage der bestimmten gewünschten Korndichte; und
Durchführen der bestimmten gewünschten Anzahl von ALD-Zyklen.

4. Verfahren gemäß Anspruch 1, wobei die poröse Sensorschicht (136) eine Vielzahl von Körnern (148) umfasst und das Bilden der porösen Sensorschicht (136) umfasst:
Bestimmen einer gewünschten Dicke der porösen Sensorschicht (136);
Bestimmen einer gewünschten Anzahl von ALD-Zyklen auf der Grundlage der bestimmten gewünschten Dicke; und
Durchführen der bestimmten gewünschten Anzahl von ALD-Zyklen.

5. Verfahren gemäß Anspruch 1, wobei die poröse Sensorschicht (136) eine Vielzahl von Körnern (148) umfasst und das Bilden der porösen Sensorschicht (136) umfasst:
Bestimmen einer gewünschten Anzahl von Korngrenzen (152) zwischen Körnern (148) der Vielzahl von Körnern (148);
Bestimmen einer gewünschten Anzahl von ALD-Zyklen auf der Grundlage der bestimmten gewünschten Anzahl von Korngrenzen (152); und
Durchführen der bestimmten gewünschten Anzahl von ALD-Zyklen.

6. Verfahren gemäß Anspruch 1, ferner umfassend:
Bilden einer Heizerschicht (120) auf dem Substrat; und
Bilden der Keimschicht (124) auf der Heizerschicht (120).

7. Halbleitersensorvorrichtung (102), erhalten durch das Verfahren gemäß einem der Ansprüche 1-6.

## Revendications

1. Procédé de fabrication d'un dispositif capteur à semi-conducteur (102) comprenant :
la formation à partir de dioxyde de silicium d'une couche de germe (124) au dessus d'un substrat (116) ;
la formation d'au moins une électrode (128) au-dessus de la couche de germe (124) ; et
la formation d'une couche de détection poreuse (136) sur la couche de germe (124) et en communication électrique avec l'au moins une électrode (128) à l'aide d'un dépôt de couches atomiques, ALD, par nucléation, au niveau de sites à distance les uns des autres (182) sur la couche de germe (124), d'un matériau de détection, ce qui forme de cette manière une pluralité de joints de grains (152) résultants dans la couche de détection poreuse (136),
**caractérisé en ce que** la formation de la couche de germe (124) comprend en outre une étape de structuration de la couche de germe (124) par
a) creusement de tranchées dans la couche de germe déposée (124),
b) gravure ionique de la couche de germe déposée (124) au niveau de sites de nucléation à distance les uns des autres (182) ou
c) activation chimique de sites de nucléation à distance les uns des autres (182) sur la couche de germe déposée (124).

2. Procédé selon la revendication 1, dans lequel la couche de détection poreuse (136) comprend une pluralité de grains (148) et la formation de la couche de détection poreuse (136) comprend :
la détermination d'une taille de grain souhaitée de la pluralité de grains (148) ;
la détermination d'un nombre souhaité de cycles d'ALD sur la base de la taille de grain souhaitée déterminée ; et
la mise en oeuvre du nombre souhaité de cycles d'ALD déterminé.

3. Procédé selon la revendication 1, dans lequel la couche de détection poreuse (136) comprend une pluralité de grains (148) et la formation de la couche de détection poreuse (136) comprend :
la détermination d'une densité des grains souhaitée de la pluralité de grains (148) ;
la détermination d'un nombre souhaité de cycles d'ALD sur la base de la densité des grains souhaitée déterminée ; et
la mise en oeuvre du nombre souhaité de cycles d'ALD déterminé.

4. Procédé selon la revendication 1, dans lequel la couche de détection poreuse (136) comprend une pluralité de grains (148) et la formation de la couche de détection poreuse (136) comprend :
la détermination d'une épaisseur souhaitée de la couche de détection poreuse ;
la détermination d'un nombre souhaité de cycles d'ALD sur la base de l'épaisseur souhaitée déterminée ; et
la mise en oeuvre du nombre souhaité de cycles d'ALD déterminé.

5. Procédé selon la revendication 1, dans lequel la couche de détection poreuse (136) comprend une pluralité de grains (148) et la formation de la couche de détection poreuse (136) comprend :
la détermination d'un nombre souhaité de joints de grains (152) entre des grains (148) de la pluralité de grains (148) ;
la détermination d'un nombre souhaité de cycles d'ALD sur la base du nombre souhaité de joints de grains (152) déterminé ; et
la mise en oeuvre du nombre souhaité de cycles d'ALD déterminé.

6. Procédé selon la revendication 1 comprenant en outre :
la formation d'une couche de chauffage (120) au-dessus du substrat ; et
la formation de la couche de germe (124) au-dessus de la couche de chauffage (120).

7. Dispositif capteur à semi-conducteur (102) obtenu par le procédé selon l'une quelconque des revendications 1--6.
